(19) Europäisches Patentamt
European Patent Office
Office européen des brevets

(11) **EP 4 142 008 B1**

(12) **EUROPEAN PATENT SPECIFICATION**

(45) Date of publication and mention of the grant of the patent:
**11.03.2026 Bulletin 2026/11**

(21) Application number: **22191253.8**

(22) Date of filing: **19.08.2022**

(51) International Patent Classification (IPC):
***H01M 10/0567** (2010.01)* ***H01M 10/0525** (2010.01)*
***H01M 4/62** (2006.01)* *H01M 4/02 (2006.01)*
*H01M 4/505 (2010.01)* *H01M 4/525 (2010.01)*
*H01M 4/58 (2010.01)*

(52) Cooperative Patent Classification (CPC):
**H01M 10/0567; H01M 4/625; H01M 10/0525;**
H01M 4/505; H01M 4/525; H01M 4/5825;
H01M 2004/021; H01M 2300/0025; Y02E 60/10

(54) **RECHARGEABLE LITHIUM BATTERY**
WIEDERAUFLADBARE LITHIUMBATTERIE
BATTERIE RECHARGEABLE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2021 KR 20210113345**

(43) Date of publication of application:
**01.03.2023 Bulletin 2023/09**

(73) Proprietor: **Samsung SDI Co., Ltd.**
**Yongin-si, Gyeonggi-do 17084 (KR)**

(72) Inventors:
- **Park, Injun**
**17084 Yongin-si, Gyeonggi-do (KR)**
- **Kim, Myunghoon**
**17084 Yongin-si, Gyeonggi-do (KR)**
- **Kim, Sanghoon**
**17084 Yongin-si, Gyeonggi-do (KR)**
- **Kim, Yunhee**
**17084 Yongin-si, Gyeonggi-do (KR)**
- **Park, Hongryeol**
**17084 Yongin-si, Gyeonggi-do (KR)**
- **Shin, Jeongmin**
**17084 Yongin-si, Gyeonggi-do (KR)**
- **Oh, Seungryong**
**17084 Yongin-si, Gyeonggi-do (KR)**
- **Jeong, Myunghwan**
**17084 Yongin-si, Gyeonggi-do (KR)**
- **Choi, Hyunbong**
**17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(56) References cited:
**EP-A1- 2 746 288** **CN-A- 108 365 265**
**CN-A- 108 428 942** **CN-A- 113 130 996**
**KR-A- 20190 123 136** **US-A1- 2020 052 335**
**US-A1- 2020 185 773**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 142 008 B1

## Description

## BACKGROUND OF THE INVENTION

### (a) Field of the Invention

This disclosure relates to a rechargeable lithium battery.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

In particular, as IT devices increasingly achieve high performance, a high-capacity battery is required, but the high capacity may be realized through expansion of a voltage range, increasing energy density but bringing about a problem of deteriorating performance of a positive electrode due to oxidization of an electrolyte solution in the high voltage range.

For example, $LiPF_6$, which is most often used as a lithium salt of the electrolyte solution, reacts with an electrolyte solvent to promote depletion of the solvent and generate a large amount of gas. $LiPF_6$ is decomposed and produces a decomposition product such as HF, $PF_5$, and the like, which causes the electrolyte depletion and leads to performance deterioration and insufficient safety at a high temperature.

For example, KR 2019 0123136 A discloses a rechargeable lithium battery comprising a positive electrode including a positive active material; a negative electrode including a negative active material and an electrolyte solution including a non-aqueous organic solvent, a lithium salt and a cyclic halogenophosphite compound as an additive. US 2020/185773 A1 discloses an electrolyte for a secondary battery which includes a lithium salt, a nonaqueous organic solvent and a cyclic fluorophosphonate compound. CN 113130996 A describes phosphorous-containing compounds as lithium battery electrolyte additives and a lithium battery, which includes the lithium battery electrolyte, a positive electrode, a negative electrode, a separator, and a packaging casing. The battery electrolyte contains a non-aqueous organic solvent and lithium salt. US 2020/052335 A1 relates to a lithium secondary battery including a positive electrode including a positive active material layer, the positive active material layer including a positive active material and a carbonaceous nanostructure; a negative electrode including a negative active material; and a non-aqueous organic solvent, a lithium salt, and an additive including a compound comprising difluorophosphite groups. CN 108 428 942 A relates to an electrolyte for a lithium-ion battery including non-aqueous organic solvents, lithium salts and additives which are six-membered cyclic phosphite compounds and CN 108 365 265 A describes non-aqueous electrolyte compositions for a lithium-ion battery wherein the non-aqueous electrolyte comprises a non-aqueous organic solvent, conductive lithium salt and a cyclic phosphate or cyclic phosphite additive. EP 2 746 288 A1 discloses a rechargeable lithium battery, comprising a positive electrode including a positive active material, a negative electrode including a negative active material, and an electrolyte comprising: a lithium salt, a non-aqueous organic solvent and an electrolyte additive.

The decomposition products of the electrolyte solution are deposited into a film on the surface of an electrode to increase internal resistance of the battery and eventually cause problems of deteriorating battery performance and shortening a cycle-life. In particular, this side reaction is further accelerated at a high temperature where a reaction rate becomes faster, and gas components generated due to the side reaction may rapidly increase an internal pressure of the battery and thus have a fatal adverse effect on stability of the battery.

An oxidization of the electrolyte solution in the high voltage range is very accelerated and thus known to greatly increase resistance of the electrode during the long-term charge and discharge process.

Accordingly, an electrolyte solution applicable under conditions of a high voltage and a high temperature condition is being required.

## SUMMARY OF THE INVENTION

An embodiment provides a rechargeable lithium battery with improved battery stability by suppressing decomposition of an electrolyte solution and a side reaction with an electrode and simultaneously, with improved initial resistance and storage characteristics at a high temperature by improving impregnation of a positive electrode in the electrolyte solution.

An embodiment of the present invention provides a rechargeable lithium battery including a positive electrode including a positive active material layer; a negative electrode including a negative active material layer; and an electrolyte solution including a non-aqueous organic solvent, a lithium salt, and an additive,

wherein the positive active material layer includes a positive active material and carbon nanotube,

the carbon nanotube is included in an amount of greater than about 0.1 wt% and less than about 3.0 wt% based on the total weight of the positive active material layer, and

the additive includes a compound represented by Chemical Formula 1.

[Chemical Formula 1]

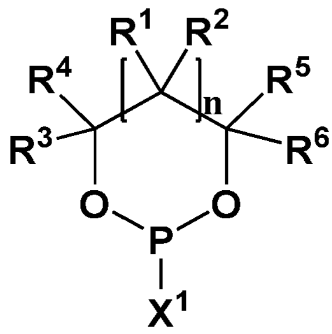

In Chemical Formula 1,

$X^1$ is a fluoro group, a chloro group, a bromo group, or an iodo group,

$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group,

wherein in the term "substituted or unsubstituted", "substituted" means that a hydrogen atom in a compound is replaced by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, C1 to C4 alkoxy group, C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof and

n is an integer of 0 or 1; wherein

the compound represented by Chemical Formula 1 is included in an amount of greater than 0.2 parts by weight and less than 2.0 parts by weight based on 100 parts by weight of the non-aqueous organic solvent and the lithium salt of the electrolyte solution and wherein

the average length of the carbon nanotubes is 5 $\mu$m to 100 $\mu$m.

Chemical Formula 1 may include a compound represented by Chemical Formula 1A or Chemical Formula 1B.

[Chemical Formula 1A] [Chemical Formula 1B]

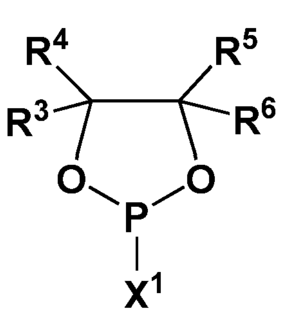

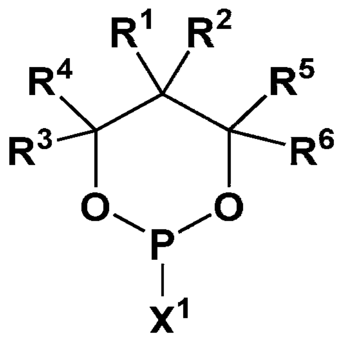

In Chemical Formula 1A and Chemical Formula 1B,

$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In Chemical Formula 1A and Chemical Formula 1B, $R^3$ and $R^4$ may each be hydrogen, and at least one of $R^1$, $R^2$, $R^5$, and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

The compound represented by Chemical Formula 1 may be at least one selected from the compounds of Group 1.

[Group 1]

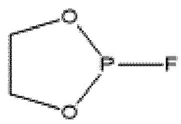

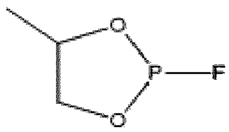

The electrolyte solution may further include at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene Carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluoro biphenyl (2-FBP).

The positive active material may be at least one type of lithium composite oxide represented by Chemical Formula 2.

[Chemical Formula 2] $Li_xM^1_{1-y-z-w}M^2_yM^3_zM^4_w(PO_4)_{1-t}(O_2)_t$

In Chemical Formula 2,
$0.5 \leq x < 1.8$, $0 \leq y \leq 1.0$, $0 \leq z \leq 1.0$, $0 < y+z+w \leq 1.0$, $0 \leq t \leq 1.0$, $0 \leq w \leq 1.0$, $M^1$ to $M^3$ are each independently any one selected from metals such as Ni, Co, Mn, Fe, Al, Sr, or La, and a combination thereof, and $M^4$ is selected from Ti, Mg, Zr, Ca, Nb, P, F, B, and a combination thereof.

For example, the positive active material may be a lithium composite oxide represented by at least one of Chemical Formula 2-1 to Chemical Formula 2-4.

[Chemical Formula 2-1] $Li_{x1}N_{i1-y1-z1}Co_{y1}M^3_{z1}M^4_{w1}O_2$

In Chemical Formula 2-1,

$M^3$ is Mn, Al, or a combination thereof,
$M^4$ is Ti, Mg, Zr, Ca, Nb, P, F, B, or a combination thereof,
$0.9 \leq x1 < 1.2$, $0 \leq y1 \leq 0.2$, $0 < z1 \leq 0.3$, $0 < y1+z1 \leq 0.5$, and $0 \leq w1 \leq 0.1$.

[Chemical Formula 2-2] $Lix_2MnM^4_{w2}O_2$

In Chemical Formula 2-2,
$0.9 \leq x2 < 1.2$, $0 \leq w2 \leq 1.0$, and $M^4$ is selected from Ti, Mg, Zr, Ca, Nb, P, F, B, or a combination thereof.

[Chemical Formula 2-3] $Li_{x3}CoM^4_{w3}O_2$

In Chemical Formula 2-3,

$M^4$ is Ti, Mg, Zr, Ca, Nb, P, F, B, or a combination thereof,
$0.5 < x3 \leq 1$, and $0 \leq w3 \leq 0.1$.

[Chemical Formula 2-4] $Li_{x4}Fe_{1-z4}M^3_{z4}M^4_{w4}PO_4$

In Chemical Formula 2-4,

$M^3$ is Co, Ni, or a combination thereof,
$M^4$ is Ti, Mg, Zr, Ca, Nb, P, F, B, or a combination thereof,
$0.9 \leq x4 \leq 1.8$, $0 \leq z4 \leq 0.3$, and $0 \leq w4 \leq 0.1$.

A rechargeable lithium battery with improved initial resistance and high-temperature storage characteristics may be implemented by suppressing an increase in the internal resistance of the battery.

## BRIEF DESCRIPTION OF THE DRAWINGS

FIG. 1 is a schematic view illustrating a rechargeable lithium battery according to an embodiment of the present invention.

## DETAILED DESCRIPTION OF THE EMBODIMENTS

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.
Hereinafter, when a definition is not otherwise provided, "substituted" refers to replacement of hydrogen of a compound by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.
A rechargeable lithium battery may be classified into a lithium ion battery, a lithium ion polymer battery, and a lithium polymer battery depending on types of a separator and an electrolyte and also may be classified to be cylindrical, prismatic, coin-type, pouch-type, and the like depending on shapes. In addition, it may be bulk type and thin film type depending on sizes. Structures and manufacturing methods for these batteries pertaining to this disclosure are well known in the art.
Herein, a cylindrical rechargeable lithium battery will be exemplarily described as an example of the rechargeable lithium battery. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte solution (not shown) impregnating the positive electrode 114, the negative electrode 112, and the separator 113, a battery case 120 housing the battery cell, and a sealing member 140 sealing the battery case 120.
Hereinafter, a more detailed configuration of the rechargeable lithium battery 100 according to an embodiment of the present invention will be described.
A rechargeable lithium battery according to an embodiment of the present invention includes a positive electrode, a negative electrode, and an electrolyte solution.
**The** electrolyte solution includes a non-aqueous organic solvent, a lithium salt, and an additive, and the additive includes a compound represented by Chemical Formula 1.

[Chemical Formula 1]

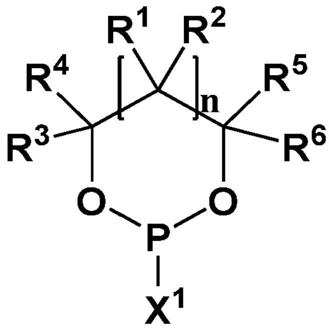

In Chemical Formula 1,

$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

According to an embodiment, in Chemical Formula 1 $X^1$ is F.

The compound represented by Chemical Formula 1 has high high-temperature stability on the surface of the negative electrode, forms a solid electrolyte interface (SEI) with excellent ion conductivity, and suppresses a side reaction of $LiPF_6$ by a $-PO_2X^1$ (especially $-PO_2F$) functional group to reduce the gas generation caused by a decomposition reaction of the electrolyte solution during high-temperature storage.

Specifically, the compound represented by Chemical Formula 1 may be coordinated with a pyrolyzed product of a lithium salt such as $LiPF_6$ or anions dissociated from the lithium salt and thus form a complex, and the complex formation may stabilize the pyrolyzed product of a lithium salt such as $LiPF_6$ or the anions dissociated from the lithium salt. Therefore, it may suppress an undesired side reaction of the anions with the electrolyte and prevent gas generation inside a rechargeable lithium battery and thus greatly reduce a defect rate as well as improve cycle-life characteristics of the rechargeable lithium battery.

Chemical Formula 1 represented by Chemical Formula 1A or Chemical Formula 1B.

[Chemical Formula 1A] [Chemical Formula 1B]

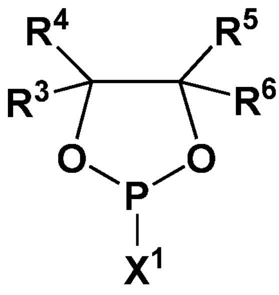

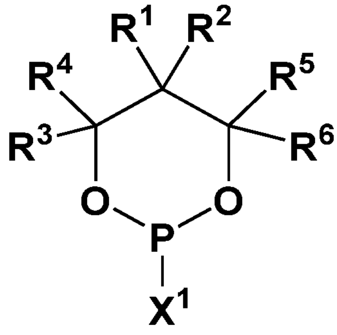

In Chemical Formula 1A and Chemical Formula 1B,

$X^1$ is a fluoro group, a chloro group, a bromo group, or an iodo group,
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In Chemical Formula 1A and Chemical Formula 1B, $R^3$ and $R^4$ may each be hydrogen, and at least one of $R^1$, $R^2$, $R^5$, and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, Chemical Formula 1 may be represented by Chemical Formula 1A.

In a specific example, in Chemical Formula 1A, $R^3$ and $R^4$ may each be hydrogen and at least one of $R^5$ and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, in Chemical Formula 1A, $R^3$ and $R^4$ may each be hydrogen and at least one of $R^5$ and $R^6$ may be a substituted or unsubstituted C1 to C10 alkyl group.

According to an embodiment, in Chemical Formula 1A or Chemical Formula 1B $X^1$ is F.

According to the present invention the compound represented by Chemical Formula 1 is included in an amount of greater than about 0.2 parts by weight and less than about 2.0 parts by weight, for example about 0.3 parts by weight to about 1.5 parts by weight, or about 0.5 parts by weight to about 1.5 parts by weight based on 100 parts by weight of the non-aqueous organic solvent and the lithium salt of the electrolyte solution (i.e. the combined weight of the non-aqueous organic solvent and the lithium salt without any other additive).

When the amount of the compound represented by Chemical Formula 1 is within the above range, a rechargeable lithium battery having improved storage characteristics at a high temperature and cycle-life characteristics can be implemented.

For example, the compound represented by Chemical Formula 1 may be selected from the compounds of Group 1, i.e. 2-fluoro-1,3,2-dioxaphospholane and 2-fluoro-4-methyl-1,3,2-dioxaphospholane.

[Group 1]

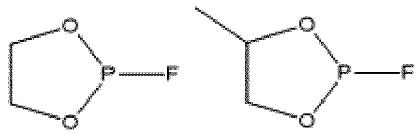

Meanwhile, the electrolyte may further include other additives in addition to the aforementioned additive.

The other additives may include at least one of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluorobiphenyl (2-FBP).

By further including the aforementioned other additives, cycle-life may be further improved or gases generated from the positive electrode and the negative electrode may be effectively controlled during high-temperature storage.

The other additives may be included in an amount of about 0.2 to 20 parts by weight, specifically about 0.2 to 15 parts by weight, for example about 0.2 to 10 parts by weight based on the total weight of the electrolyte solution for a rechargeable lithium battery.

When the content of other additives is as described above, the increase in film resistance may be minimized, thereby contributing to the improvement of battery performance.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methylpropionate, ethyl propionate, propyl propionate, decanolide, mevalonolactone, and caprolactone. The ether-based solvent may include dibutyl ether, tetraglyme, diglyme, dimethoxyethane, 2-methyltetrahydrofuran, and tetrahydrofuran. In addition, the ketone-based solvent may include cyclohexanone. The alcohol-based solvent may include ethanol, and isopropyl alcohol and the aprotic solvent may include nitriles such as R-CN (wherein R is a hydrocarbon group having a C2 to C20 linear, branched, or cyclic structure and may include a double bond, an aromatic ring, or an ether bond), amides such as dimethyl formamide, dioxolanes such as 1,3-dioxolane and sulfolanes.

The non-aqueous organic solvent may be used at alone or in a mixture, and when the organic solvent is used in a

mixture, the mixture ratio may be controlled in accordance with a desirable battery performance.

The carbonate-based solvent is prepared by mixing a cyclic carbonate and a linear carbonate. When the cyclic carbonate and linear carbonate are mixed together in a volume ratio of about 5:5 to about 1:9, an electrolyte performance may be improved.

In particular, in an embodiment, the non-aqueous organic solvent may include the cyclic carbonate and the linear carbonate in a volume ratio of about 5:5 to about 2:8, and as a specific example, the cyclic carbonate and the linear carbonate may be included in a volume ratio of about 4:6 to about 2:8.

As a more specific example, the cyclic carbonate and the linear carbonate may be included in a volume ratio of about 3:7 to about 2:8.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 3.

[Chemical Formula 3]

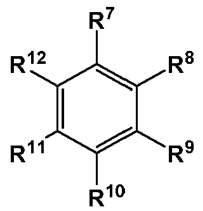

**In** Chemical Formula 3, $R^7$ to $R^{12}$ are the same or different and are selected from hydrogen, a halogen, a C1 to C10 alkyl group, a C1 to C10 haloalkyl group, and a combination thereof.

Specific examples of the aromatic hydrocarbon-based organic solvent are selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The lithium salt dissolved in the non-organic solvent supplies lithium ions in a battery, enables a basic operation of a rechargeable lithium battery, and improves transportation of the lithium ions between positive and negative electrodes. Examples of the lithium salt include at least one supporting salt selected from $LiPF_6$, $LiBF_4$, lithium difluoro(oxalato)borate (LiDFOB), $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide, LiFSI), $LiC_4F_9SO_3$, $LiClO_4$, $LiAlO_2$, $LiAlCl_4$, $LiN(C_xF_{2x+1}SO_2)(C_yF_{2y+1}SO_2)$, (wherein, x and y are natural numbers, for example, an integer ranging from 1 to 20), LiCl, LiI, and $LiB(C_2O_4)_2$ (lithium bis(oxalato) borate, LiBOB). The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The positive electrode includes a positive electrode current collector and a positive active material layer on the positive electrode current collector, and the positive active material layer includes a positive active material and carbon nanotube.

The carbon nanotube includes in an amount of greater than 0.1 wt% and less than 3.0 wt%, for example greater than or equal to 0.5 wt% and less than 3.0 wt%, greater than or equal to 0.5 wt% and less than or equal to 2 wt% based on the total weight of the positive active material layer.

When the content of the carbon nanotube is within the above range, the amount of the dispersant for dispersing the carbon nanotubes may be adjusted to an appropriate amount, and an increase in resistance due to the increase in the amount of the dispersant may be alleviated, thereby preventing deterioration of battery performance.

According to the present invention the average length of the carbon nanotube is greater than or equal to 5 μm and less than 100 μm, for example 10 μm to 100 μm, or 50 μm to 100 μm.

When the average length of the carbon nanotube is within the above range, coating uniformity of the positive active material layer may be secured, thereby increasing impregnation of the electrode plate in the electrolyte solution to reduce the electrode plate resistance.

The average length of the carbon nanotube refers to an average value of a maximum distance between two arbitrary both ends of the plurality of carbon nanotubes. The average length of carbon nanotube in the present disclosure is an arithmetic average of the lengths of a plurality of carbon-based nanostructures. The average length of carbon nanotube may be measured using a field-radial scanning electron microscope. Meanwhile, the carbon nanotube according to an embodiment of the present invention may be in a form including at least one of a single-walled carbon nanotube, a double-walled carbon nanotube, and a multi-walled carbon nanotube. Among them, single-walled or double-walled carbon nanotubes may improve dispersibility of the slurry containing the carbon nanotubes, and have excellent processability such as coating when forming the active material layer, and at the same time ensure excellent conductivity of the active material layer formed using the same.

The positive active material may include lithiated intercalation compounds that reversibly intercalate and deintercalate lithium ions.

Specifically, a composite oxide of a nickel-containing metal and lithium may be used.

Examples of the positive active material may include a compound represented by any one of the following chemical formulas.

$Li_aA_{1-b}X_bD_2$ ($0.90 \leq a \leq 1.8, 0 \leq b \leq 0.5$); $Li_aA_{1-b}X_bO_{2-c}D_c$ ($0.90 \leq a \leq 1.8, 0 \leq b \leq 0.5, 0 \leq c \leq 0.05$); $Li_aE_{1-b}X_bO_{2-c}D_c$ ($0.90 \leq a \leq 1.8, 0 \leq b \leq 0.5, 0 \leq c \leq 0.05$); $Li_aE_{2-b}X_bO_{4-c}D_c$ ($0.90 \leq a \leq 1.8, 0 \leq b \leq 0.5, 0 \leq c \leq 0.05$); $Li_aNi_{1-b-c}Co_bX_cD_\alpha$ ($0.90 \leq a \leq 1.8, 0 \leq b \leq 0.5, 0 \leq c \leq 0.5, 0 < \alpha \leq 2$); $Li_aNi_{1-b-c}CO_bX_cO_{2-\alpha}T_\alpha$ ($0.90 \leq a \leq 1.8, 0 \leq b \leq 0.5, 0 \leq c \leq 0.05, 0 < \alpha < 2$); $Li_aNi_{1-b-c}Co_bX_cO_{2-\alpha}T_2$ ($0.90 \leq a \leq 1.8, 0 \leq b \leq 0.5, 0 \leq c \leq 0.05, 0 < \alpha < 2$) $Li_aNi_{1-b-c}Mn_bX_cD_\alpha$ ($0.90 \leq a \leq 1.8, 0 \leq b \leq 0.5, 0 \leq c \leq 0.05, 0 < \alpha \leq 2$); $Li_aNi_{1-b-c}Mn_bX_cO_{2-\alpha}T_\alpha$ ($0.90 \leq a \leq 1.8, 0 \leq b \leq 0.5, 0 \leq c \leq 0.05, 0 < \alpha < 2$); $Li_aNi_{1-b-c}Mn_bX_cO_{2-\alpha}T_2$ ($0.90 \leq a \leq 1.8, 0 \leq b \leq 0.5, 0 \leq c \leq 0.05, 0 < \alpha < 2$); $Li_aNi_bE_cG_dO_2$ ($0.90 \leq a \leq 1.8, 0 \leq b \leq 0.9, 0 \leq c \leq 0.5, 0.001 \leq d \leq 0.1$); $Li_aNi_bCo_cMn_dGeO_2$ ($0.90 \leq a \leq 1.8, 0 \leq b \leq 0.9, 0 \leq c \leq 0.5, 0 \leq d \leq 0.5, 0.001 \leq e \leq 0.1$); $Li_aNiG_bO_2$ ($0.90 \leq a \leq 1.8, 0.001 \leq b \leq 0.1$); $Li_aCoG_bO_2$ ($0.90 \leq a \leq 1.8, 0.001 \leq b \leq 0.1$); $Li_aMn_{1-b}G_bO_2$ ($0.90 \leq a \leq 1.8, 0.001 \leq b \leq 0.1$); $Li_aMn_2G_bO_4$ ($0.90 \leq a \leq 1.8, 0.001 \leq b \leq 0.1$); $Li_aMn_{1-g}G_gPO_4$ ($0.90 \leq a \leq 1.8, 0 \leq g \leq 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); $Li_aFePO_4$ ($0.90 \leq a \leq 1.8$)

In the above chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive active material (e.g., spray coating, dipping), which is well known to persons having ordinary skill in this art, so a detailed description thereof is omitted.

The positive active material may be, for example, at least one of lithium composite oxides represented by Chemical Formula 2.

[Chemical Formula 2] $$Li_xM^1_{1-y-z-w}M^2_yM^3_zM^4_w(PO_4)_{1-t}(O_2)_t$$

In Chemical Formula 2,

$0.5 \leq x < 1.8, 0 \leq y \leq 1.0, 0 \leq z \leq 1.0, 0 < y+z+w \leq 1.0, 0 \leq t \leq 1.0, 0 \leq w \leq 1.0$, $M^1$ to $M^3$ are each independently any one selected from metals such as Ni, Co, Mn, Fe, Al, Sr, La, and a combination thereof, and $M^4$ is selected from Ti, Mg, Zr, Ca, Nb, Fe, P, F, B, and a combination thereof.

For example, the positive active material may be a lithium composite oxide represented by at least one of Chemical Formula 2-1 to Chemical Formula 2-4.

[Chemical Formula 2-1] $$Li_{x1}N_{i1-y1-z1}Co_{y1}M^3_{z1}M^4_{w1}O_2$$

In Chemical Formula 2-1,

$M^3$ is Mn, Al, or a combination thereof,
$M^4$ is Ti, Mg, Zr, Ca, Nb, P, F, B, or a combination thereof,
$0.9 \leq x1 < 1.2, 0 \leq y1 \leq 0.2, 0 < z1 \leq 0.3, 0 < y1+z1 \leq 0.5$, and $0 \leq w1 \leq 0.1$.

For example, the positive active material represented by Chemical Formula 2-1 may be $LiNi_{0.88}Co_{0.105}Al_{0.015}O_2$, $LiNi_{0.91}Co_{0.075}Al_{0.015}O_2$, $LiNi_{0.94}Co_{0.045}Al_{0.015}O_2$, $LiNi_{0.88}Co_{0.105}Mn_{0.015}O_2$, $LiNi_{0.91}Co_{0.075}Mn_{0.015}O_2$, or $LiNi_{0.94}Co_{0.045}Mn_{0.015}O_2$.

[Chemical Formula 2-2] $Lix_2MnM^4_{w2}O_2$

In Chemical Formula 2-2,
$0.9 \leq x2 < 1.2$, $0 \leq w2 \leq 1.0$, $M^4$ is selected from Ti, Mg, Zr, Ca, Nb, P, F, B, or a combination thereof.
For example, the positive active material represented by Chemical Formula 2-2 may be $LiMnO_2$.

[Chemical Formula 2-3] $Li_{x3}CoM^4_{w3}O_2$

In Chemical Formula 2-3,

$M^4$ is Ti, Mg, Zr, Ca, Nb, P, F, B, or a combination thereof,
$0.5 < x3 \leq 1$, and $O \leq w3 \leq 0.1$.

For example, the positive active material represented by Chemical Formula 2-3 may be $LiCoO_2$.

[Chemical Formula 2-4] $Li_{x4}Fe_{1-z4}M^3_{z4}M^4_{w4}PO_4$

In Chemical Formula 2-4,

$M^3$ is Co, Ni, or a combination thereof,
$M^4$ is Ti, Mg, Zr, Ca, Nb, Fe, P, F, B, or a combination thereof,
$0.9 \leq x4 \leq 1.8$, $0 \leq z4 \leq 0.3$, and $0 \leq w4 \leq 0.1$.

For example, the positive active material represented by Chemical Formula 2-4 may be $LiFePO_4$.
A content of the positive active material may be about 90 wt% to about 98 wt% based on the total weight of the positive active material layer.
In an embodiment of the present invention, the positive active material layer may include a binder. A content of the binder may be about 1 wt% to about 5 wt% based on the total weight of the positive active material layer.
The binder improves binding properties of positive active material particles with one another and with a current collector. Examples thereof are polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.
Al may be used as the positive electrode current collector.
The negative electrode includes a negative electrode current collector and a negative active material layer including a negative active material formed on the negative electrode current collector.
The negative active material may include a material that reversibly intercalates/deintercalates lithium ions, a lithium metal, a lithium metal alloy, a material capable of doping/dedoping lithium, or transition metal oxide.
The material that reversibly intercalates/deintercalates lithium ions may be a carbon material which is any generally-used carbon-based negative active material in a lithium ion secondary battery and examples thereof may be crystalline carbon, amorphous carbon, or a combination thereof. Examples of the crystalline carbon may be graphite such as amorphous, sheet-shape, flake, spherical shape or fiber-shaped natural graphite or artificial graphite. Examples of the amorphous carbon may be soft carbon or hard carbon, a mesophase pitch carbonized product, calcined coke, and the like.
The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.
The material capable of doping and dedoping lithium may be Si, a Si-C composite, $SiO_x$ ($0 < x < 2$), a Si-Q alloy (wherein Q is an element selected from an alkali metal, an alkaline-earth metal, a Group 13 element, a Group 14 element excluding Si, a Group 15 element, a Group 16 element, a transition metal, a rare earth element, and a combination thereof), Sn, $SnO_2$, Sn-R (wherein R is an element selected from an alkali metal, an alkaline-earth metal, a Group 13 element, a Group 14 element excluding Sn, a Group 15 element, a Group 16 element, a transition metal, a rare earth element, and a combination thereof, and at least one thereof may be mixed with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn (excluded for R), In, Tl, Ge, P, As, Sb, Bi, S, Se, Te, Po, and a combination thereof.
The transition metal oxide may include vanadium oxide, lithium vanadium oxide, or lithium titanium oxide.

The negative active material according to an embodiment may be graphite or may include a Si composite and graphite together.

When the negative active material includes the Si composite and graphite together, the Si composite and graphite may be included in the form of a mixture, and the Si composite and graphite may be included in a weight ratio of about 1:99 to about 50:50. More specifically, the Si composite and graphite may be included in a weight ratio of about 3:97 to about 20:80.

The Si composite includes a core including Si-based particles and an amorphous carbon coating layer. For example, the Si-based particles may include at least one of Si particles, a Si-C composite, SiOx ($0 < x \leq 2$), and a Si alloy. For example, the Si-C composite may include Si particles and crystalline carbon, and an amorphous carbon coating layer on the surface of the Si-C composite.

The Si-based particles may have an average particle diameter of about 50 nm to about 200 nm.

When the average particle diameter of the Si-based particles is within the above range, volume expansion occurring during charging and discharging may be suppressed, and a break in a conductive path due to particle crushing during charging and discharging may be prevented.

The Si-based particles may be included in an amount of about 1 wt% to about 60 wt%, for example, about 3 wt% to about 60 wt%, based on the total weight of the negative active material.

The negative active material according to another embodiment may further include crystalline carbon together with the aforementioned Si-C composite.

When the negative active material includes a Si-C composite and crystalline carbon together, the Si-C composite and crystalline carbon may be included in the form of a mixture, and in this case, the Si-C composite and crystalline carbon may be included in a weight ratio of about 1:99 to about 50:50. More specifically, the Si-C composite and crystalline carbon may be included in a weight ratio of about 5:95 to about 20:80.

The crystalline carbon may include, for example, graphite, and more specifically, natural graphite, artificial graphite, or a mixture thereof.

An average particle diameter of the crystalline carbon may be about 5 μm to about 30 μm.

In the present specification, the average particle diameter may be a particle size (D50) at 50% by volume in a cumulative size-distribution curve. In other words, a mean particle size result of polydisperse samples is determined by peak analysis of the particle size distribution graph. The median D50 is the value separating the higher half of the data from the lower half. It is the determined particle size from which half of the particles are smaller and half are larger.

The average particle diameter (D50) of the particles may be measured by laser diffraction (LD). The method may be performed according to ISO 13320-1. According to the IUPAC definition, the equivalent diameter of a non-spherical particle is equal to a diameter of a spherical particle that exhibits identical properties to that of the investigated non-spherical particle.

The Si-C composite may further include a shell surrounding the surface of the Si-C composite, and the shell may include amorphous carbon.

The amorphous carbon may include soft carbon, hard carbon, a mesophase pitch carbonized product, calcined coke, or a mixture thereof.

The amorphous carbon may be included in an amount of about 1 part by weight to about 50 parts by weight, for example about 5 parts by weight to about 50 parts by weight, or about 10 parts by weight to about 50 parts by weight based on 100 parts by weight of the carbon-based active material.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

In the negative active material layer, the negative active material may be included in an amount of about 95 wt% to about 99 wt% based on the total weight of the negative active material layer.

In an embodiment of the present disclosure, the negative active material layer includes a binder, and optionally a conductive material. In the negative active material layer, a content of the binder may be about 1 wt% to about 5 wt% based on the total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylenecopolymer, polyethyleneoxide, polyvinylpyrrolidone, polyepichlorohydrine, polyphosphazene, polyacrylonitrile, polystyrene, an ethylenepropylenediene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 parts by weight to about 3 parts by weight based on 100 parts by weight of the negative active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, and a carbon fiber; a metal-based material of a metal powder or a metal fiber including copper, nickel, aluminum, and silver; a conductive polymer such as a polyphenylene derivative; or a mixture thereof.

The negative current collector may be selected from a copper foil, a nickel foil, a stainless steel foil, a titanium foil, a nickel foam, a copper foam, a polymer substrate coated with a conductive metal, and a combination thereof.

A separator may exist between the positive electrode and the negative electrode depending on the type of the rechargeable lithium battery. Such a separator may include polyethylene, polypropylene, polyvinylidene fluoride, or multilayers thereof such as a polyethylene/polypropylene double-layered separator, a polyethylene/polypropylene/polyethylene triple-layered separator, and a polypropylene/polyethylene/polypropylene triple-layered separator.

Hereinafter, examples of the present invention and comparative examples are described. These examples, however, are not in any sense to be interpreted as limiting the scope of the invention.

## Manufacture of Rechargeable Lithium Battery Cell

### Example 1

$LiNi_{0.88}Co_{0.105}Al_{0.015}O_2$ as a positive active material, polyvinylidene fluoride as a binder, and carbon nanotubes (average length: 50 μm) as a conductive material were mixed in a weight ratio of 96:3:1, respectively, and were dispersed in N-methyl pyrrolidone to prepare a positive active material slurry.

The positive active material slurry was coated on a 15 μm-thick Al foil, dried at 100°C, and then pressed to prepare a positive electrode.

As a negative active material, a mixture of artificial graphite and a Si-C composite in a weight ratio of 93:7 was used, and the negative active material, a styrene-butadiene rubber binder, and carboxymethyl cellulose were mixed in a weight ratio of 98:1:1, respectively, and dispersed in distilled water to prepare a negative active material slurry.

The Si-C composite included a core including artificial graphite and silicon particles, and a coal-based pitch is coated on the surface of the core.

The negative active material slurry was coated on a 10 μm-thick Cu foil, dried at 100°C, and then pressed to prepare a negative electrode.

An electrode assembly was prepared by assembling the prepared positive and negative electrodes and a polyethylene separator having a thickness of 25 μm, and an electrolyte solution was injected to prepare a rechargeable lithium battery cell.

A composition of an electrolyte solution is as follows.

(Composition of Electrolyte Solution)

Salt: 1.5 M $LiPF_6$
Solvent: ethylene carbonate: ethylmethyl carbonate: dimethyl carbonate (EC:EMC:DMC = volume ratio of 20:10:70)
Additive: 0.75 parts by weight of 2-fluoro-4-methyl-1,3,2-dioxaphospholane/10 parts by weight of fluoroethylene carbonate (FEC) / 0.5 parts by weight of succinonitrile (SN)

Herein, in the composition of electrolyte solution, "parts by weight" means the relative content of additives to 100 parts by weight of the total electrolyte solution excluding additive (the lithium salt + the non-aqueous organic solvent).

### Comparative Example 1

A rechargeable lithium battery cell was manufactured in the same manner as in Example 1, except that an

electrolyte solution containing no additives (2-fluoro-4-methyl-1,3,2-dioxaphospholane) was used.

**Examples 2 and 3**

Rechargeable lithium battery cells were manufactured in the same manner as in Example 1, except that each content of the carbon nanotube was changed respectively into 0.5 wt% and 2.0 wt% to manufacture a positive electrode.

**Comparative Examples 2 and 3**

Rechargeable lithium battery cells were manufactured in the same manner as in Example 1, except that each content of the carbon nanotube was changed respectively into 0.1 wt% and 3.0 wt% to manufacture a positive electrode.

**Examples 4 and 5**

Rechargeable lithium battery cells were manufactured in the same manner as in Example 1, except that each content of the additive (2-fluoro-4-methyl-1,3,2-dioxaphospholane) was changed respectively into 0.5 parts by weight and 1.5 parts by weight to manufacture an electrolyte solution.

**Comparative Examples 4 and 5**

Rechargeable lithium battery cells were manufactured in the same manner as in Example 1, except that each content of the additive (2-fluoro-4-methyl-1,3,2-dioxaphospholane) was changed respectively into 0.2 parts by weight and 2.0 parts by weight to manufacture an electrolyte solution.

**Examples 6 and 7**

Rechargeable lithium battery cells were manufactured in the same manner as in Example 1, except that each average length of the carbon nanotube was changed respectively into 5 μm and 100 μm to manufacture a positive electrode.

**Comparative Examples 6 and 7**

Rechargeable lithium battery cells were manufactured in the same manner as in Example 1, except that each average length of the carbon nanotube was changed respectively into 1 μm and 200 μm to manufacture a positive electrode.

The rechargeable lithium battery cells were manufactured with the following compositions shown in Table 1.

(Table 1)

| | Composition of positive electrode | | Composition of electrolyte solution (content of 2-fluoro-4-methyl-1,3,2-dioxaphospholane) (parts by weight) |
|---|---|---|---|
| | Content of CNT (wt%) | Length of CNT (μm) | |
| Comparative Example 1 | 1.0 | 50 | - |
| Example 1 | 1.0 | 50 | 0.75 |
| Comparative Example 2 | 0.1 | 50 | 0.75 |
| Comparative Example 3 | 3.0 | 50 | 0.75 |
| Example 2 | 0.5 | 50 | 0.75 |
| Example 3 | 2.0 | 50 | 0.75 |
| Comparative Example 4 | 1.0 | 50 | 0.2 |
| Comparative Example 5 | 1.0 | 50 | 2.0 |
| Example 4 | 1.0 | 50 | 0.5 |
| Example 5 | 1.0 | 50 | 1.5 |
| Comparative Example 6 | 1.0 | 1.0 | 0.75 |

(continued)

| | Composition of positive electrode | | Composition of electrolyte solution (content of 2-fluoro-4-methyl-1,3,2-dioxaphospholane) (parts by weight) |
|---|---|---|---|
| | Content of CNT (wt%) | Length of CNT (μm) | |
| Comparative Example 7 | 1.0 | 200 | 0.75 |
| Example 6 | 1.0 | 5 | 0.75 |
| Example 7 | 1.0 | 100 | 0.75 |

**Evaluation 1: Impregnation Evaluation of Electrolyte Solution**

The electrode assemblies according to Examples 1 to 7 and Comparative Examples 1 to 7 were impregnated in an electrolyte solution by injecting the electrolyte solution thereinto.

The electrolyte solution was prepared by using a mixed solvent of EC/EMC/DMC (a volume ratio of 20/10/70) to prepare a 1.5 M $LiPF_6$ solution and adding 0 to 3 parts by weight of 2-fluoro-4-methyl-1,3,2-dioxaphospholane thereto.

An amount (impregnation amount) of the electrolyte solution impregnated per hour in the electrode assemblies was calculated according to Equation 1.

Impregnation amount = (Weight of electrode assembly after impregnating electrode assembly in electrolyte solution) - (Weight of initial electrode assembly) [Equation 1]

The results are as shown in Table 2.

**Evaluation 2: Evaluation of DC Resistance Increase Rate after High-temperature Storage**

The rechargeable lithium battery cells according to Examples 1 to 7 and Comparative Examples 1 to 7 were measured with respect to initial DC resistance (DCIR) as $\triangle V/\triangle I$ (change in voltage/change in current), and after setting a maximum energy state inside the cells to a fully charged state (SOC 100%), the cells were stored at a high temperature (60 °C) for 30 days and then, measured again with respect to DC resistance to calculate a DCIR increase rate (%) according to Equation 2, and the results are shown in Table 2.

[Equation 2]

DCIR increase rate = (DCIR after 30 days / initial DCIR) X 100%

**Evaluation 3: Evaluation of High-temperature Cycle-life Characteristics**

The rechargeable lithium battery cells according to Examples 1 to 7 and Comparative Examples 1 to 7 were once charged and discharged at 0.2 C and then, measured with respect to charge and discharge capacity (before stored at a high temperature).

In addition, the rechargeable lithium battery cells according to Examples 1 to 7 and Comparative Examples 1 to 7 were charged at SOC100% (a state of being charged to 100% of charge capacity when total charge capacity of a battery cell was 100%) and then, stored at 60 °C for 5 hours and initially charged and discharged at 0.5 C. Herein, charge and discharge characteristics of the cells were evaluated by measuring charge and discharge capacity and calculating a discharge capacity ratio of the $300^{th}$ discharge capacity to the first discharge capacity, and the retention (%) results are shown in Table 2.

(Table 2)

| | Impregnation amount (g) | High-temperature cycle-life capacity retention (%) | DCIR increase rate (%) |
|---|---|---|---|
| Comparative Example 1 | 0.0139 | 83 | 135 |
| Example 1 | 0.0218 | 89 | 119 |

(continued)

| | Impregnation amount (g) | High-temperature cycle-life capacity retention (%) | DCIR increase rate (%) |
|---|---|---|---|
| Comparative Example 2 | 0.0142 | 83 | 135 |
| Comparative Example 3 | 0.0109 | 81 | 139 |
| Example 2 | 0.0205 | 87 | 122 |
| Example 3 | 0.0172 | 86 | 128 |
| Comparative Example 4 | 0.0113 | 81 | 142 |
| Comparative Example 5 | 0.0102 | 80 | 138 |
| Example 4 | 0.0181 | 87 | 125 |
| Example 5 | 0.0161 | 85 | 127 |
| Comparative Example 6 | 0.0125 | 82 | 140 |
| Comparative Example 7 | 0.0115 | 83 | 137 |
| Example 6 | 0.0174 | 85 | 127 |
| Example 7 | 0.0197 | 88 | 123 |

Referring to Table 2, the rechargeable lithium battery cells according to the examples had an impregnated electrolyte solution in a larger amount than the cells according to the comparative examples and thus exhibited improved high-temperature cycle-life characteristics and resistance characteristics after the high-temperature storage.

Accordingly, the rechargeable lithium battery cell according to an example embodiment of the present invention exhibited improved impregnation properties in an electrolyte solution and thus realized excellent cycle characteristics and in addition, exhibited reduced resistance after the high-temperature storage and thus improved high-temperature stability.

## Claims

**1.** A rechargeable lithium battery (100), comprising

a positive electrode (114) including a positive active material layer;
a negative electrode (112) including a negative active material; and
an electrolyte solution including a non-aqueous organic solvent, a lithium salt, and an additive,
wherein the positive active material layer includes a positive active material and carbon nanotube, and
the carbon nanotube is included in an amount of greater than 0.1 wt% and less than 3.0 wt% based on the total weight of the positive active material layer, and
the additive includes a compound represented by Chemical Formula 1:

[Chemical Formula 1]

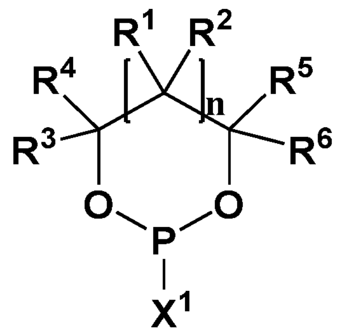

wherein, in Chemical Formula 1,
$X^1$ is a fluoro group, a chloro group, a bromo group, or an iodo group,

$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, wherein in the term "substituted or unsubstituted", "substituted" means that a hydrogen atom in a compound is replaced by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, C1 to C4 alkoxy group, C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof and
n is an integer of 0 or 1; wherein
the compound represented by Chemical Formula 1 is included in an amount of greater than 0.2 parts by weight and less than 2.0 parts by weight based on 100 parts by weight of the non-aqueous organic solvent and the lithium salt of the electrolyte solution and wherein
the average length of the carbon nanotubes is 5 μm to 100 μm.

2. The rechargeable lithium battery (100) of claim 1, wherein

Chemical Formula 1 includes a compound represented by Chemical Formula 1A or Chemical Formula 1B:

[Chemical Formula 1A] [Chemical Formula 1B]

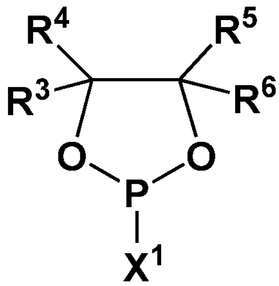

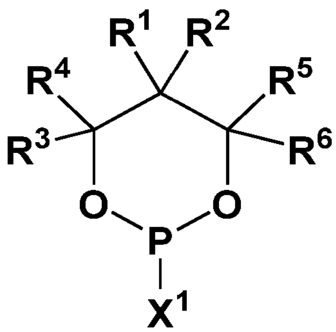

wherein, in Chemical Formula 1A and Chemical Formula 1B,
$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

3. The rechargeable lithium battery (100) of claim 2, wherein

in Chemical Formula 1A and Chemical Formula 1B, $R^3$ and $R^4$ are each hydrogen, and
at least one of $R^1$, $R^2$, $R^5$, and $R^6$ is a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

4. The rechargeable lithium battery (100) of claim 2, wherein
the compound represented by Chemical Formula 1 is at least one selected from the compounds of Group 1:

[Group 1]

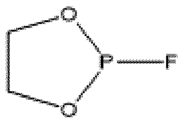 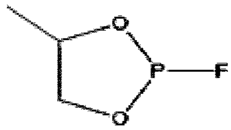

5. The rechargeable lithium battery (100) of any one of the preceding claims, wherein the electrolyte solution further includes at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene Carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluoro biphenyl (2-FBP).

6. The rechargeable lithium battery (100) of any one of the preceding claims, wherein

the positive active material is at least one type of lithium composite oxide represented by Chemical Formula 2:

[Chemical Formula 2] $Li_xM^1_{1-y-z-w}M^2_yM^3_zM^4_w(PO_4)_{1-t}(O_2)_t$

wherein, in Chemical Formula 2,
$M^1$ to $M^3$ are each independently any one selected from metals of Ni, Co, Mn, Fe, Al, Sr, La, and a combination thereof,
$M^4$ is Ti, Mg, Zr, Ca, Nb, P, F, B, or a combination thereof,
$0.5 \leq x < 1.8$, $0 \leq y \leq 1.0$, $0 \leq z \leq 1.0$, $0 < y+z+w \leq 1.0$, $0 \leq t \leq 1.0$, and $0 \leq w \leq 1.0$.

7. The rechargeable lithium battery (100) of claim 6, wherein

the positive active material is a lithium composite oxide represented by at least one of Chemical Formula 2-1 to Chemical Formula 2-4:

[Chemical Formula 2-1] $Li_{x1}N_{i1-y1-z1}Co_{y1}M^3_{z1}M^4_{w1}O_2$

wherein, in Chemical Formula 2-1,
$M^3$ is Mn, Al, or a combination thereof,
$M^4$ is Ti, Mg, Zr, Ca, Nb, P, F, B, or a combination thereof,
$0.9 \leq x1 < 1.2$, $0 \leq y1 \leq 0.2$, $0 < z1 \leq 0.3$, $0 < y1+z1 \leq 0.5$, and $0 \leq w1 \leq 0.1$,

[Chemical Formula 2-2] $Li_{x2}MnM^4_{w2}O_2$

wherein, in Chemical Formula 2-2,
$0.9 \leq x2 < 1.2$, $0 \leq w2 \leq 1.0$, and $M^4$ is selected from Ti, Mg, Zr, Ca, Nb, P, F, B, or a combination thereof,

[Chemical Formula 2-3] $Li_{x3}CoM^4_{w3}O_2$

wherein, in Chemical Formula 2-3,
$M^4$ is Ti, Mg, Zr, Ca, Nb, P, F, B, or a combination thereof,
$0.5 < x3 \leq 1$, and $O \leq w3 \leq 0.1$,

[Chemical Formula 2-4] $Li_{x4}Fe_{1-z4}M^3_{z4}M^4_{w4}PO_4$

wherein, in Chemical Formula 2-4,
$M^3$ is Co, Ni, or a combination thereof,
$M^4$ is Ti, Zr, Ca, Nb, Fe, P, F, B, or a combination thereof,
$0.9 \leq x4 \leq 1.8$, $0 \leq z4 \leq 0.3$, and $0 \leq w4 \leq 0.1$.

## Patentansprüche

1. Wiederaufladbare Lithiumbatterie (100), umfassend

eine positive Elektrode (114) mit einer positiven aktiven Materialschicht;
eine negative Elektrode (112) mit einem negativen aktiven Material; und
eine Elektrolytlösung, die ein nichtwässriges organisches Lösungsmittel, ein Lithiumsalz und einen Zusatzstoff enthält,
wobei die positive aktive Materialschicht ein positives aktives Material und Kohlenstoffnanoröhren enthält, und wobei die Kohlenstoffnanoröhren in einer Menge von mehr als 0,1 Gew.-% und weniger als 3,0 Gew.-%, bezogen auf das Gesamtgewicht der positiven aktiven Materialschicht, enthalten sind, und
wobei der Zusatzstoff eine Verbindung enthält, die durch die chemische Formel 1 dargestellt ist:

[Chemische Formel 1]

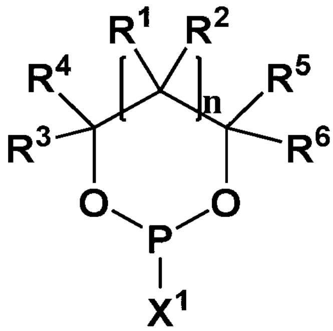

wobei in der chemischen Formel 1
$X^1$ eine Fluorgruppe, eine Chlorgruppe, eine Bromgruppe oder eine Iodgruppe ist,
$R^1$ bis $R^6$ jeweils unabhängig voneinander Wasserstoff, eine Cyanogruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cycloalkylgruppe, eine substituierte oder unsubstituierte C6- bis C20-Arylgruppe oder eine substituierte oder unsubstituierte C2- bis C20-Heteroarylgruppe sind, wobei in dem Begriff "substituiert oder unsubstituiert" "substituiert" bedeutet, dass ein Wasserstoffatom in einer Verbindung durch einen Substituenten ersetzt ist, der ausgewählt ist aus einem Halogenatom (F, Br, Cl oder I), einer Hydroxygruppe, einer Alkoxygruppe, einer Nitrogruppe, einer Cyanogruppe, einer Aminogruppe, einer Azidogruppe, einer Amidino-Gruppe, einer Hydrazinogruppe, einer Hydrazonogruppe, einer Carbonylgruppe, einer Carbamylgruppe, einer Thiolgruppe, einer Estergruppe, einer Carboxylgruppe oder einem Salz davon, einer Sulfonsäuregruppe oder einem Salz davon, einer Phosphorsäuregruppe oder einem Salz davon, einer C1- bis C20-Alkylgruppe, einer C2- bis C20-Alkenylgruppe, einer C2- bis C20-Alkinylgruppe, einer C6-bis C30-Arylgruppe, einer C7- bis C30-Arylalkylgruppe, C1- bis Alkoxygruppe, C1- bis C20-Heteroalkylgruppe,
einer C3- bis C20-Heteroarylalkylgruppe, einer C3- bis C30-Cycloalkylgruppe, einer C3-bis C15-Cycloalkenylgruppe, einer C6- bis C15-Cycloalkinylgruppe, einer C2- bis C20-Heterocycloalkylgruppe und einer Kombination davon, und
wobei n eine ganze Zahl von 0 oder 1 ist; wobei
die durch die chemische Formel 1 dargestellte Verbindung in einer Menge von mehr als 0,2 Gewichtsteilen und weniger als 2,0 Gewichtsteilen, bezogen auf 100 Gewichtsteile des nichtwässrigen organischen Lösungsmittels und des Lithiumsalzes der Elektrolytlösung, enthalten ist, und wobei
die durchschnittliche Länge der Kohlenstoffnanoröhren 5 μm bis 100 μm beträgt.

2. Wiederaufladbare Lithiumbatterie (100) nach Anspruch 1, wobei die chemische Formel 1 eine Verbindung umfasst, die durch die chemische

Formel 1A oder die chemische Formel 1B dargestellt ist:

[Chemische Formel 1A] [Chemische Formel 1B]

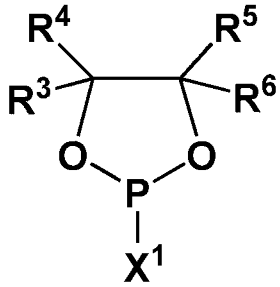 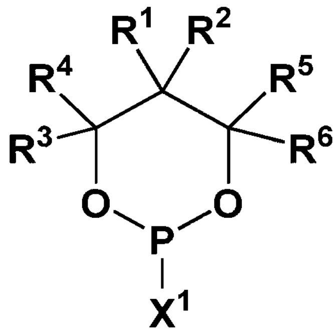

wobei in der chemischen Formel 1A und der chemischen Formel 1B
$X^1$ eine Fluorgruppe, eine Chlorgruppe, eine Bromgruppe oder eine Iodgruppe ist und
$R^1$ bis $R^6$ jeweils unabhängig voneinander Wasserstoff, eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe sind.

**3.** Wiederaufladbare Lithiumbatterie (100) nach Anspruch 2, wobei

in der chemischen Formel 1A und der chemischen Formel 1B $R^3$ und $R^4$ jeweils Wasserstoff sind und mindestens eines von $R^1$, $R^2$, $R^5$ und $R^6$ eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe ist.

**4.** Wiederaufladbare Lithiumbatterie (100) nach Anspruch 2, wobei
die durch die chemische Formel 1 dargestellte Verbindung mindestens eine aus den Verbindungen der Gruppe 1 ausgewählte Verbindung ist:

[Gruppe 1]

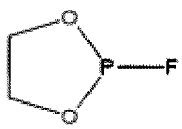 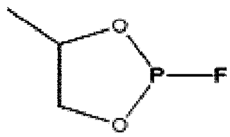

**5.** Wiederaufladbare Lithiumbatterie (100) nach einem der vorstehenden Ansprüche, wobei
die Elektrolytlösung ferner mindestens einen von weiteren Zusatzstoffen enthält, die aus Vinylencarbonat (VC), Fluorethylencarbonat (FEC), Difluorethylencarbonat, Chlorethylencarbonat, Dichlorethylencarbonat, Bromethylencarbonat, Dibromethylencarbonat, Nitroethylencarbonat, Cyanoethylencarbonat, Vinylethylencarbonat (VEC), Adiponitril (AN), Succinonitril (SN), 1,3,6-Hexantricyanid (HTCN), Propensulton (PST), Propansulton (PS), Lithiumtetrafluorborat ($LiBF_4$), Lithiumdifluorophosphat ($LiPO_2F_2$) und 2-Fluorbiphenyl (2-FBP) ausgewählt sind.

**6.** Wiederaufladbare Lithiumbatterie (100) nach einem der vorstehenden Ansprüche, wobei

das positive aktive Material mindestens eine Art von Lithium-Verbundoxid ist, das durch die chemische Formel 2 dargestellt ist:

[Chemische Formel 2] $$Li_xM^1{}_{1-y-z-w}M^2{}_yM^3{}_zM^4{}_w(PO_4)_{1-t}(O_2)_t$$

wobei in der chemischen Formel 2
$M^1$ bis $M^3$ jeweils unabhängig voneinander eines ausgewählt aus den Metallen Ni, Co, Mn, Fe, Al, Sr, La und einer Kombination davon sind,
$M^4$ Ti, Mg, Zr, Ca, Nb, P, F, B oder eine Kombination davon ist,
$0{,}5 \le x < 1{,}8$, $0 \le y \le 1{,}0$, $0 \le z \le 1{,}0$, $0 < y+z+w \le 1{,}0$, $0 \le t \le 1{,}0$ und $0 \le w \le 1{,}0$.

**7.** Wiederaufladbare Lithiumbatterie (100) nach Anspruch 6, wobei

das positive aktive Material ein Lithium-Verbundoxid ist, das durch mindestens eine der chemischen Formeln 2-1 bis 2-4 dargestellt ist:

[Chemische Formel 2-1] $Li_{x1}Ni_{1-y1-z1}CO_{y1}M^3_{z1}M^4_{w1}O_2$

wobei in der chemischen Formel 2-1
$M^3$ Mn, Al oder eine Kombination davon ist,
$M^4$ Ti, Mg, Zr, Ca, Nb, P, F, B oder eine Kombination davon ist,
$0{,}9 \leq x1 < 1{,}2$, $0 \leq y1 \leq 0{,}2$, $0 < z1 \leq 0{,}3$, $0 < y1 + z1 \leq 0{,}5$ und $0 \leq w1 \leq 0{,}1$,

[Chemische Formel 2-2] $Lix_2MnM^4_{w2}O_2$

wobei in der chemischen Formel 2-2
$0{,}9 \leq x2 < 1{,}2$, $0 \leq w2 \leq 1{,}0$ und $M^4$ aus Ti, Mg, Zr, Ca, Nb, P, F, B oder einer Kombination davon ausgewählt ist,

[Chemische Formel 2-3] $Li_{x3}CoM^4_{w3}O_2$

wobei in der chemischen Formel 2-3
$M^4$ Ti, Mg, Zr, Ca, Nb, P, F, B oder eine Kombination davon ist,
$0{,}5 < x3 \leq 1$ und $0 \leq w3 \leq 0{,}1$,

[Chemische Formel 2-4] $Li_{x4}Fe_{1-z4}M^3_{z4}M^4_{w4}PO_4$

wobei in der chemischen Formel 2-4
$M^3$ Co, Ni oder eine Kombination davon ist,
$M^4$ Ti, Zr, Ca, Nb, Fe, P, F, B oder eine Kombination davon ist,
$0{,}9 \leq x4 \leq 1{,}8$, $0 \leq z4 \leq 0{,}3$ und $0 \leq w4 \leq 0{,}1$.

## Revendications

**1.** Batterie rechargeable au lithium (100), comportant :

une électrode positive (114) incluant une couche de matériau actif positif ;
une électrode négative (112) incluant un matériau actif négatif ; et
une solution électrolytique incluant un solvant organique non aqueux, un sel de lithium et un additif,
dans laquelle la couche de matériau actif positif inclut un matériau actif positif et un nanotube de carbone, et le nanotube de carbone est inclus en une quantité inférieure à 0,1 % en poids et inférieure à 3,0 % en poids sur la base du poids total de la couche de matériau actif positif, et
l'additif inclut un composé représenté par la Formule chimique 1 :

[Formule chimique 1]

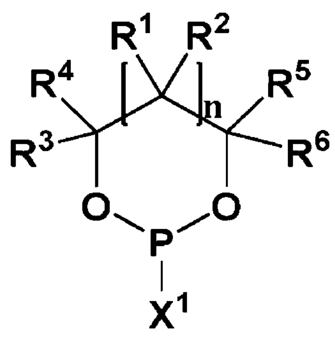

dans laquelle, dans la Formule chimique 1,

$X^1$ est un groupe fluoro, un groupe chloro, un groupe bromo ou un groupe iodo,
$R^1$ à $R^6$ sont chacun indépendamment hydrogène, un groupe cyano, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué, ou un groupe hétéroaryle en C2 à C20 substitué ou non substitué, dans laquelle, dans l'expression « substitué ou non substitué », « substitué » signifie qu'un atome d'hydrogène dans un composé est remplacé par un substituant sélectionné parmi un atome d'halogène (F, Br, Cl ou I), un groupe hydroxy, un groupe alcoxy, un groupe nitro, un groupe cyano, un groupe amino, un groupe azido, un groupe amidino, un groupe hydrazino, un groupe hydrazono, un groupe carbonyle, un groupe carbamyle, un groupe thiol, un groupe ester, un groupe carboxyle ou un sel de celui-ci, un groupe acide sulfonique ou un sel de celui-ci, un groupe acide phosphorique ou un sel de celui-ci, un groupe alkyle en C1 à C20, un groupe alcényle en C2 à C20, un groupe alcynyle en C2 à C20, un groupe aryle en C6 à C30, un groupe arylalkyle en C7 à C30, un groupe alcoxy en C1 à C4, un groupe hétéroalkyle en C1 à C20, un groupe hétéroarylalkyle en C3 à C20, un groupe cycloalkyle en C3 à C30, un groupe cycloalcényle en C3 à C15, un groupe cycloalcynyle en C6 à C15, un groupe hétérocycloalkyle en C2 à C20 et une combinaison de ceux-ci et
n est un nombre entier de 0 ou 1 ; dans laquelle
le composé représenté par la Formule chimique 1 est inclus en une quantité supérieure à 0,2 partie en poids et inférieure à 2,0 parties en poids sur la base de 100 parties en poids du solvant organique non aqueux et du sel de lithium de la solution électrolytique et dans laquelle
la longueur moyenne des nanotubes de carbone est de 5 μm à 100 μm.

**2.** Batterie au lithium rechargeable (100) selon la revendication 1, dans laquelle

la Formule chimique 1 inclut un composé représenté par la Formule chimique 1A ou la Formule chimique 1B :

[Formule chimique 1A] [Formule chimique 1B]

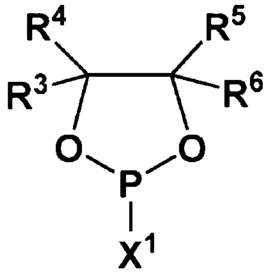
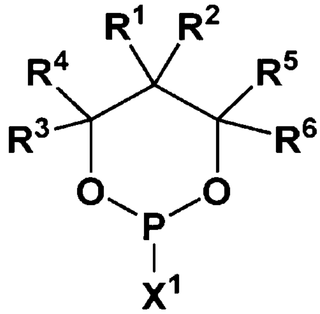

dans laquelle, dans la Formule chimique 1A et la Formule chimique 1B,
$X^1$ est un groupe fluoro, un groupe chloro, un groupe bromo, ou un groupe iodo, et
$R^1$ à $R^6$ sont chacun indépendamment hydrogène, un groupe alkyle en C1 à C10 substitué ou non substitué, un groupe alcoxy en C1 à C10 substitué ou non substitué, un groupe alcényle en C2 à C10 substitué ou non substitué, ou un groupe alcynyle en C2 à C10 substitué ou non substitué.

**3.** Batterie rechargeable au lithium (100) selon la revendication 2, dans laquelle

dans la Formule chimique 1A et la Formule chimique 1B, $R^3$ et $R^4$ sont chacun hydrogène, et
au moins un parmi $R^1$, $R^2$, $R^5$ et $R^6$ est un groupe alkyle en C1 à C10 substitué ou non substitué, un groupe alcoxy en C1 à C10 substitué ou non substitué, un groupe alcényle en C2 à C10 substitué ou non substitué, ou un groupe alcynyle en C2 à C10 substitué ou non substitué.

**4.** Batterie rechargeable au lithium (100) selon la revendication 2, dans laquelle
le composé représenté par la Formule chimique 1 est au moins l'un sélectionné parmi les composés du Groupe 1 :

[Groupe 1]

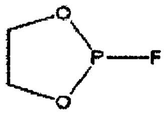 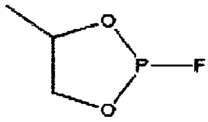

**5.** Batterie rechargeable au lithium (100) selon l'une quelconque des revendications précédentes, dans laquelle la solution électrolytique inclut en outre au moins l'un d'autres additifs sélectionnés parmi carbonate de vinylène (VC), carbonate de fluoroéthylène (FEC), carbonate de difluoroéthylène, carbonate de chloroéthylène, carbonate de dichloroéthylène, carbonate de bromoéthylène, carbonate de dibromoéthylène, carbonate de nitroéthylène, carbonate de cyanoéthylène, carbonate de vinyléthylène (VEC), adiponitrile (AN), succinonitrile (SN), tricyanure de 1,3,6-hexane (HTCN), propène sultone (PST), propane sultone (PS), tétrafluoroborate de lithium ($LiBF_4$), difluorophosphate de lithium ($LiPO_2F_2$) et 2-fluorobiphényle (2-FBP).

**6.** Batterie rechargeable au lithium (100) selon l'une quelconque des revendications précédentes, dans laquelle

le matériau actif positif est au moins un type d'oxyde composite de lithium représenté par la Formule chimique 2 :

[Formule chimique 2] $Li_xM^1_{1-y-z-w}M^2_yM^3_zM^4_w(PO_4)_{1-t}(O_2)_t$

dans laquelle, dans la Formule chimique 2,
$M^1$ à $M^3$ sont chacun indépendamment l'un quelconque sélectionné parmi des métaux de Ni, Co, Mn, Fe, Al, Sr, La et une combinaison de ceux-ci,
$M^4$ est Ti, Mg, Zr, Ca, Nb, P, F, B ou une combinaison de ceux-ci,
$0,5 \leq x < 1, 8$, $0 \leq y \leq 1,0$, $0 \leq z \leq 1,0$, $0 < y + z + w \leq 1,0$, $0 \leq t \leq 1,0$, et $0 \leq w \leq 1,0$.

**7.** Batterie rechargeable au lithium (100) selon la revendication 6, dans laquelle

le matériau actif positif est un oxyde composite de lithium représenté par au moins l'une de la Formule chimique 2-1 à la Formule chimique 2-4 :

[Formule chimique 2-1] $Li_{x1}Ni_{1-y1-z1}Co_{y1}M^3_{z1}M^4_{w1}O_2$

dans laquelle, dans la Formule chimique 2-1,
$M^3$ est Mn, Al ou une combinaison de ceux-ci,
$M^4$ est Ti, Mg, Zr, Ca, Nb, P, F, B ou une combinaison de ceux-ci,
$0,9 \leq x1 < 1,2$, $0 \leq y1 \leq 0,2$, $0 < z1 \leq 0, 3$, $0 < y1 + z1 \leq 0,5$, et $0 \leq w1 \leq 0,1$,

[Formule chimique 2-2] $Li_{x2}\ MnM^4_{w2}O_2$

dans laquelle, dans la Formule chimique 2-2,
$0,9 \leq x2 < 1,2$, $0 \leq w2 \leq 1,0$, et $M^4$ est sélectionné parmi Ti, Mg, Zr, Ca, Nb, P, F, B ou une combinaison de ceux-ci,

[Formule chimique 2-3] $Li_{x3}\ COM^4_{w3}O_2$

dans laquelle, dans la Formule chimique 2-3,
$M^4$ est Ti, Mg, Zr, Ca, Nb, P, F, B ou une combinaison de ceux-ci,
$0,5 < x3 \leq 1$ et $0 \leq w3 \leq 0,1$,

[Formule chimique 2-4] $Li_{x4}Fe_{1-z4}M^3_{z4}M^4_{w4}PO_4$

dans laquelle, dans la Formule chimique 2-4,
$M^3$ est Co, Ni ou une combinaison de ceux-ci,
$M^4$ est Ti, Zr, Ca, Nb, Fe, P, F, B ou une combinaison de ceux-ci,
$0,9 \leq x4 \leq 1, 8$, $0 \leq z4 \leq 0,3$ et $0 \leq w4 \leq 0,1$.

【FIG. 1】

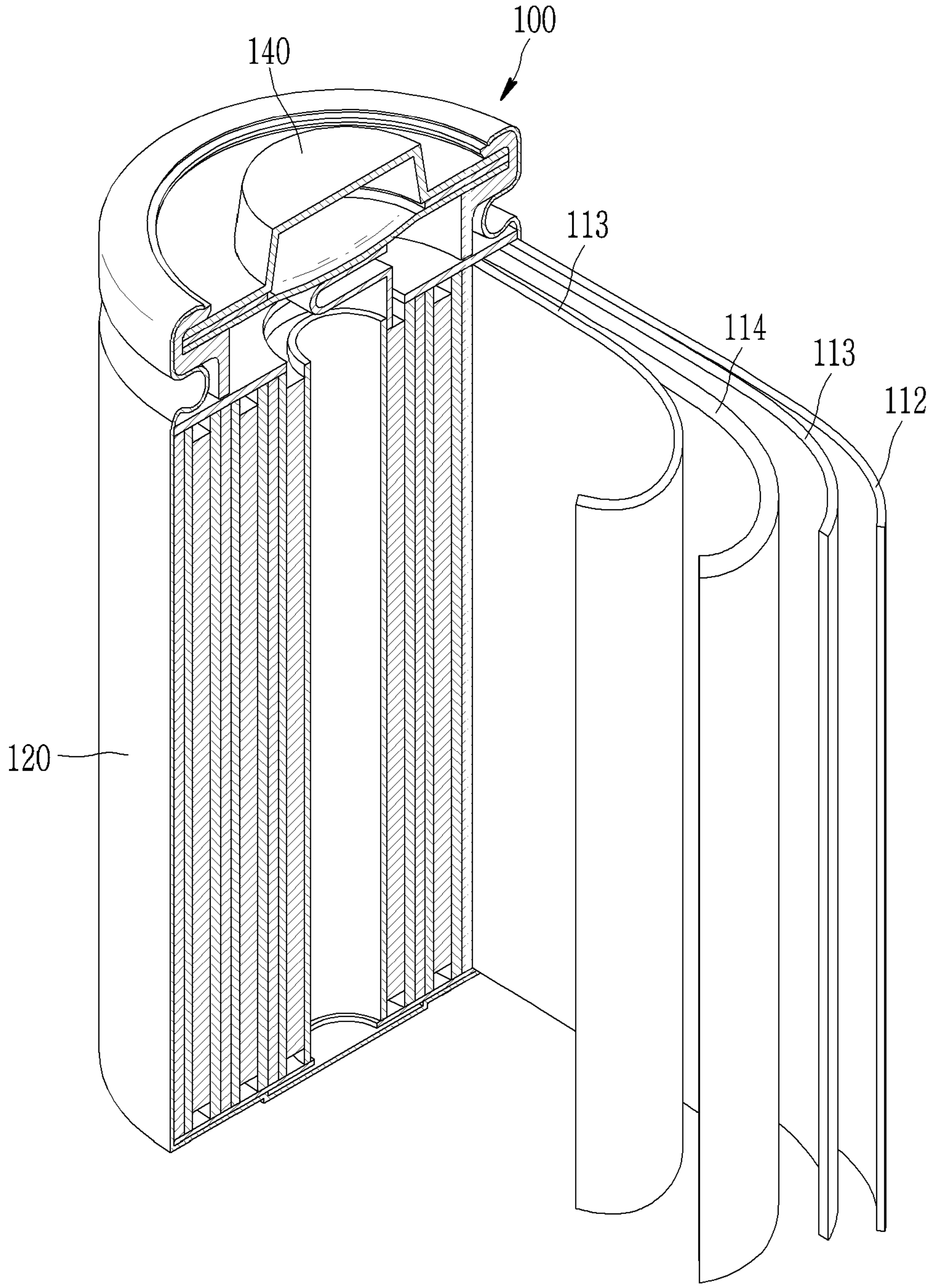

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20190123136 A
- US 2020185773 A1
- CN 113130996 A
- US 2020052335 A1
- CN 108428942 A
- CN 108365265 A
- EP 2746288 A1